# EUROPEAN PATENT APPLICATION

(11) **EP 1 715 398 A2**
(43) Date of publication of application: **25.10.2006**
(21) Application number: 05026966.1
(22) Date of filing: 09.12.2005
(51) Int. Cl.: G05D 1/02

(54) **Cleaning robot having auto-return function to charching-stand and method using the same**

(30) Priority: 20.04.2005 KR 2005032762
(71) Applicant: LG Electronics Inc., Yeongdeungpo-Gu Seoul (KR)
(72) Inventor: Jung, II-kyun, Geumcheon-gu Seoul (KR)
(74) Representative: Vossius & Partner

(57) **Abstract**

A cleaning robot, and more particularly a cleaning robot comprising a camera unit for photographing an external image containing the charging-stand image, converting it into electrical image information, and outputting externally; and a microprocessor for storing the image information inputted the camera unit, acquiring position information of the charging-stand from the external image on the basis of the image information of the charging-stand in detecting a return signal, and causing the cleaning robot to be returned to the charging-stand. The cleaning robot having an auto-return function to a charging-stand detects a direction and position of the charging-stand using image information of the charging-stand, and thereby correctly and rapidly returning to the charging-stand for the cleaning robot.

## Description

The present invention relates to a cleaning robot, and more particularly to a cleaning robot having an auto-return function to a charging-stand, wherein the cleaning robot is capable of correctly and rapidly returning to a charging-stand for a cleaning robot using image information inputted from a camera, and a method using the same.

A cleaning robot is an apparatus for spontaneously moving a defined cleaning area such as a house and an office, and inhaling dust or impurities. The cleaning robot includes components of a general vacuum cleaner as well as other components. Herein, other components contains a running apparatus for running the cleaning robot, a lot of sensors for detecting a collision of the cleaning robot so as to run it without colliding with various obstacles, and a microprocessor for controlling the above-mentioned components of the cleaning robot, etc. The cleaning robot provides a power for driving through a battery since it moves spontaneously in the cleaning area.

On the other hand, the cleaning robot has an auto charging function in order for a convenience of a user. In accomplishing the auto charging function, the cleaning robot checks the power level remaining on the battery. If the power level remaining on the battery is below a reference value, the cleaning robot is automatically returned to a charging-stand which is placed at a predetermined position in the cleaning area, charged the insufficient power level of the battery, and restarted a corresponding operation thereof.

However, the conventional method for auto-returning to a charging-stand for a cleaning robot is a method for attaching an artificial mark to the charging-stand, determining a position of the charging-stand when the cleaning robot detects the mark attached to the charging-stand through a random running, and then returning the cleaning robot to the charging-stand.

But, since the conventional method is accomplished through the random running, it has different times for returning to the charging-stand according to positions of the cleaning robot. In the conventional method using the random running, if it takes a long time for detecting the artificial mark attached to the charging-stand, a power voltage charged in the battery may be all decreased while returning to the charging-stand, thereby stopping a driving of the cleaning.

Therefore, the present invention has been made in view of the above problems, and it is an object of the present invention to provide a cleaning robot having an auto-return function to a charging-stand, wherein, a position of a charging-stand is detected using image information inputted through a camera, and thereby the cleaning robot is capable of rapidly returning the charging-stand, and a method using the same.

It is another object of the present invention to provide a cleaning robot having an auto-return function to a charging-stand, wherein, whenever the cleaning robot moves every predetermined distance, surrounding information around a charger is acquired and stored through input images, and thereby the cleaning robot is capable of rapidly returning the charging-stand, and a method using the same.

In accordance with an aspect of the present invention, the above and other objects can be accomplished by the provision of a cleaning robot having an auto-return function to a charging-stand, the cleaning robot is characterized by photographing to store an image of the charging-stand, when detecting a return signal of the charging-stand, photographing an external image, confirming a position of the charging-stand from the photographed external image, and returning to the charging-stand.

Preferably, the cleaning robot further includes a camera unit for photographing an external image containing the charging-stand image, converting it into electrical image information, and outputting externally; and a microprocessor for storing the image information inputted the camera unit, acquiring position information of the charging-stand from the external image on the basis of the image information of the charging-stand in detecting a return signal, and causing the cleaning robot to be returned to the charging-stand.

Preferably, the cleaning robot further includes a memory for storing an operating program for a driving of the cleaning robot, the memory including an image information database for storing the image information of the charging-stand for the cleaning robot; and a voltage detecting circuit for detecting a battery voltage of the cleaning robot at every predetermined period, and outputting a charging request signal when the detected battery voltage is below a reference value.

Preferably, the cleaning robot further includes a running control unit for controlling a running of the cleaning robot; an image information acquisition unit for extracting the image information of the charging-stand from the image information inputted through the camera unit, and storing the extracted image information of the charging-stand in the database of the image information; and a charging-stand position calculating unit for searching the image information of the charging-stand from the image information inputted through the camera unit when the charging request signal is inputted from the battery voltage detecting circuit, acquiring position information of the charging-stand, and outputting a running control signal to the running control unit, wherein the running control signal causes the cleaning robot to be returned to the charging-stand according to the acquired position information.

In accordance with another aspect of the present invention, there is provided a cleaning robot having an auto-return function to a charging-stand, the cleaning robot is characterized by photographing to store images of the charging-stand and a surrounding thereof, when detecting a return signal of the charging-stand, photographing an external image detecting an surrounding image around the charging-stand from the photographed external image, confirming a position of the charging-stand, and returning to the charging-stand.

Preferably, the cleaning robot includes a camera unit for photographing external images containing the charging-stand image and a surrounding image, converting them into electrical image information, and outputting externally; and a microprocessor for storing the image information inputted the camera unit, acquiring position information of the charging-stand from the external image on the basis of the surrounding information around the charging-stand in detecting a return signal, and causing the cleaning robot to be returned to the charging-stand.

Preferably, the cleaning robot further includes a memory for storing an operating program for a driving of the cleaning robot, the memory including an image information database for storing the image information of the charging-stand and a surrounding information database for storing the surrounding information around the charging-stand; and a voltage detecting circuit for detecting a battery voltage of the cleaning robot at every predetermined period, and outputting a charging request signal when the detected battery voltage is below a reference value.

Preferably, the microprocessor includes a running control unit for controlling a running of the cleaning robot; an image information acquisition unit for extracting the surrounding information from the surrounding image around the charging-stand inputted through the camera unit, and storing the extracted surrounding information around the charging-stand in the database of the surrounding information; and a charging-stand position calculating unit for searching the surrounding information around the charging-stand from the image information inputted through the camera unit when the charging request signal is inputted from the battery voltage detecting circuit, acquiring position information of the charging-stand on the basis of the surrounding information around the charging-stand, and outputting a running control signal to the running control unit, wherein the running control signal causes the cleaning robot to be returned to the charging-stand according to the acquired position information.

Preferably, the microprocessor further includes a camera control unit for controlling the photographing of the external image depending on a photographing control signal of the microprocessor; a photographing unit for photographing the external image depending on a control of the camera control unit; and a converter for converting the external image photographed through the photographing unit, into electrical image information, and outputting the electrical image information.

Therefore, when a separation between the charging-stand and the cleaning robot is close, the cleaning robot calculates the position and direction of the charging-stand using the image information of the charging-stand, and returns to the charging-stand. When the separation is far away, the cleaning robot calculates the position and direction of the charging-stand using the surrounding information around the charging-stand, thereby rapidly returning to the charging-stand.

The above and other objects, features and other advantages of the present invention will be more clearly understood from the following detailed description taken in conjunction with the accompanying drawings, in which:
FIG. 1 is a schematic view illustrating a cleaning robot having an auto-return function to a charging-stand according to a preferred embodiment of the present invention;
FIG. 2 is a schematic view illustrating a cleaning robot having an auto-return function to a charging-stand according to another embodiment of the present invention;
FIG. 3 is a flowchart illustrating an auto-return method to a charging-stand for a cleaning robot according to a preferred embodiment of the present invention; and
FIG. 4 is a flowchart illustrating a method for auto-returning to a charging-stand for a cleaning robot according to another embodiment of the present invention.

Now, preferred embodiments of the present invention will be described in detail with reference to the annexed drawings.

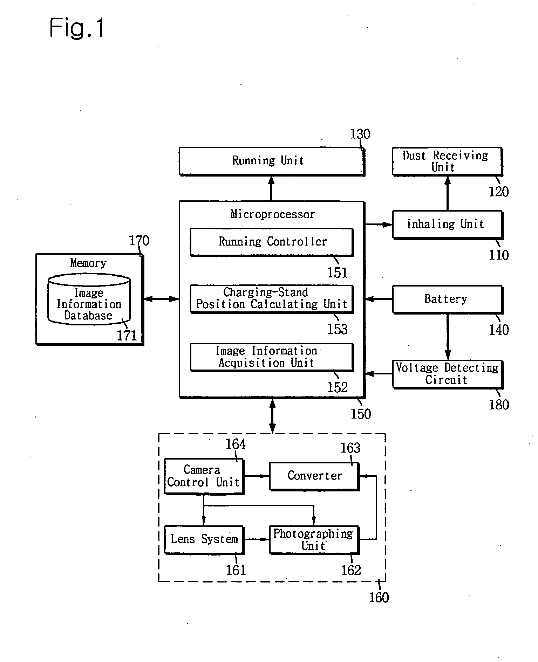

FIG. 1 is a schematic view illustrating a cleaning robot having an auto-return function to a charging-stand according to a preferred embodiment of the present invention. As shown in this drawing, the cleaning robot includes the general basic configuration of a conventional cleaning robot. Besides, the cleaning robot includes a camera unit 160 for outputting a image inputted from a lens; a memory 170 for storing an operating program to drive the cleaning robot, and containing an image information database 171 for storing image information of a charging-stand; a battery voltage detecting circuit 180 for detecting a voltage of a battery 140 in the cleaning robot, and outputting a charging request signal when the detected voltage of the battery 140 is below a reference value; and a microprocessor 150 for controlling the above-mentioned components.

To begin with, the general basic configuration of the cleaning robot includes a dust detecting sensor. Besides, the basic configuration of the general cleaning robot further includes an inhaling unit 110 for inhaling dust or impurities detected by the dust detecting sensor; a dust receiving unit 120 for receiving the dust or impurities collected by the inhaling unit 110; a running unit 130 for running the cleaning robot; a battery 140 for supplying a power voltage to a inhaling unit and a running unit (not shown); and a microprocessor 150 for controlling the above-mentioned components. A detailed description of the general basic configuration of the cleaning robot will be omitted because it is considered to be well-known.

The camera unit 160 includes a lens system 161, and further includes a photographing unit 162 for converting optical signals of the lens system 161 into analog electrical signals, a converter 163 for converting the analog electrical signal outputted through the photographing unit 162, into digital signals; and converting the digital signals in a format appreciate to the microprocessor 150; and a camera control unit 164 for controlling operations of the above-mentioned components or the whole modules.

The lens system 161 is composed of a small-sized one lens or a plurality of lenses, wherein the lens system 161 collects light and provides the collected light to the photographing unit 162. The photographing unit 162 is generally composed of a CMOS image sensing device or a CCD image sensing device, wherein the image sensing devices are well-known for converting light into an electrical signal in each pixels, synchronizing the an electrical signal with a clock and successively outputting. The converter 163 converts a voltage or current proportional to an image brightness inputted through the photographing unit 162, into digital data through a little processing, and outputs the digital data. In another embodiment, referring to a well-known camera module, the converter 163 may include a codec for compressing the photographed image in JPEG format or compressing MPEG format.

The memory 170 is composed of, for example, a nonvolatile memory device such as an EEPROM or a flash memory, which stores an operating program for driving the cleaning robot. The memory 170 according to the preferred embodiment of the present invention stores a reference voltage enough to drive the cleaning robot, and includes an image information database 171 for storing image information of the charging-stand for the cleaning robot. The image information database 171 stores the image information of the charging-stand such as color information or shape information of the charging-stand which is extracted from an image of the charging-stand for the cleaning robot inputted from the camera unit 160. An access to the data stored in the memory 170 is controlled by the microprocessor 150.

The voltage detecting circuit 180 is embedded in the cleaning robot, divides a voltage applied from the battery 140 for supplying the power voltage using a predetermined resistance ratio, and outputs the divided detecting voltage. The microprocessor 150 displays a bar for indicating the power level remained on the battery 140 to a user according to a level of the detecting voltage inputted from the voltage detecting circuit 180. In addition, the voltage detecting circuit 180 compares a voltage measured from the battery 140 with the reference voltage value enough to drive the cleaning robot which is stored in the memory 170, and outputs a charging request signal to the microprocessor 150 when the measured voltage is below the reference voltage value.

The microprocessor 150 includes a running control unit 151 for controlling a running of the cleaning robot; an image information acquisition unit 152 for extracting image information of the charging-stand from an image inputted from the camera unit 160 storing, and storing the image information database 171; and a charging-stand position calculating unit 153 for searching the image information of the charging-stand stored in the image information database 171 from the image information inputted through the camera unit according to the charging request signal, confirming a position of the charging-stand, and thereby outputting a running control signal to the running control unit 151, wherein the running control signal causes the cleaning robot to be returned to the charging-stand according to the acquired position information.

The running control unit 151 controls a running unit 130 for running the cleaning robot according to a control command inputted from the operating program of the cleaning robot.

The image information acquisition unit 152 extracts the image information of the charging-stand from an image inputted from the camera unit 160 storing according to the control command of the operating program of the cleaning robot, and stores the extracted image information on the image information database 171. The image information of the charging-stand is the color information or shape information or the charging-stand in the image which is inputted from the camera unit 160. For example, the image information acquisition unit 152 acquires the shape information or charging-stand of the charging-stand through the image photographed by the camera unit 160 when the cleaning robot deviates from the charging-stand.

When the image of the charging-stand is inputted, the image information acquisition unit 152 extracts the corresponding color information of the charging-stand. In the preferred embodiment of the present invention, the charging-stand may be made of a color which is obviously different from household electric appliances and household goods which are generally arranged in a house.

The image information acquisition unit 152 extracts color information of a charger which is obviously different from the household electric appliances, household goods and surroundings in the image acquired by the camera unit 160, and stores the extract color information on the image information database 171. The color information may be RGB values.

In addition, the image information acquisition unit 152 acquires shape information of the charging-stand, and stores the shape information. The shape information of the charging-stand is information which extracts an outline of an object, that is, an edge of the object with the corresponding color from the inputted image, and the extracted outline information is stored. The shape information of the charging-stand is used for a position and direction calculation of the charging-stand when the cleaning robot returns to the charging-stand.

The charging-stand position calculating unit 153 outputs a driving signal to camera unit 160 according to the charging request signal inputted from the voltage detecting circuit 180, checks the image information of the charging-stand inputted through the camera unit 160, calculates the direction in which the charging-stand is placed when the image information exists, and outputs to the running control unit 151.

When the voltage detecting circuit 180 outputs the charging request signal while the cleaning robot sweeps a cleaning area, the charging-stand position calculating unit 153 receives the charging request signal inputted from the voltage detecting circuit 180, and outputs the driving signal to the camera unit 160. When the camera unit 160 receives the driving signal, processes the image inputted from the lens, and outputs the processed image to the charging-stand position calculating unit 153. The charging-stand position calculating unit 153 searches an object with a color similar with the color information of the charging-stand which is stored in the image information database 171, from the image inputted the camera unit 160.

In addition, the charging-stand position calculating unit 153 extracts an outline of the searched object, and compares the extracted outline information with the shape information of the charging-stand. When the extracted outline information is similar with the color information or the shape information of the charging-stand, the charging-stand position calculating unit 153 confirms that the searched object is the charging-stand, calculates a direction according to the position, and outputs the control signal to the running control init 151. The running control init 151 drives the running unit 130, and causes the cleaning robot to be returned to the charging-stand.

In the preferred embodiment of the present invention, when the charging request signal is received from the voltage detecting circuit 180, the charging-stand position calculating unit 153 causes the cleaning robot to rotate 360 degrees at a predetermined interval, generates a rotation control signal for photographing the external image, and outputs the rotation control signal to the running control unit 151. Thus, the running control unit 151 drives the running unit 130 so that the cleaning robot rotates 360 degrees at a predetermined interval, for example, a 30 degrees interval. Therefore, since the camera unit 160 takes a photograph of all images around the cleaning robot, and transmits the photographing images to the charging-stand position calculating unit 153, thereby the position of the charging-stand and the direction information thereof may be more effectively calculated.

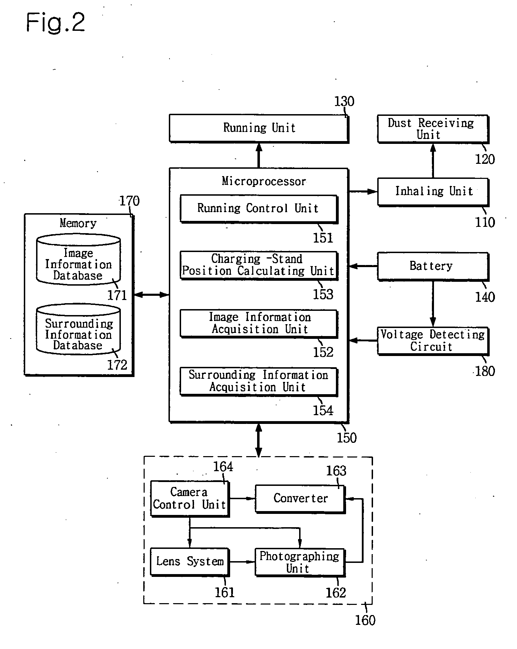

FIG. 2 is a schematic view illustrating a cleaning robot having an auto-return function to a charging-stand according to another embodiment of the present invention. As shown in this drawing, the cleaning robot according to another embodiment of the present invention further includes a surrounding information database 181 for storing surrounding information around the charging-stand inputted by the camera unit 160. Besides, the microprocessor 150 further includes a surrounding information acquisition unit 154 for extracting the surrounding information around the charging-stand from the image around the charging-stand inputted by the camera unit 160, and stores the extracted surrounding information on the surrounding information database 181. The charging-stand position calculating unit 153 extracts the surrounding information from the image inputted by the camera unit 160 according to the charging request signal, compares the extracted surrounding information with the surrounding information stored in the surrounding information database 181, calculates a direction of a position at which the charging-stand is placed, and outputs a control signal to the running control unit 151 so that the cleaning robot is returned to the charging-stand.

The surrounding information database 181 stores surrounding information such as a shape and position of a surrounding object around charging-stand and arrangement information of the charging-stand and object, which are extracted from the image around the charging-stand for the cleaning robot.

When a distance between cleaning robot and the charging-stand goes away, it is difficult to extract the color and shape information of the charging-stand from the image inputted the camera unit 160. Thus, it is difficult to calculate exactly a position and direction of the charging-stand. Consequently, the cleaning robot according to the present invention further includes a surrounding information acquisition unit 154 for searching the position and direction of the charging-stand whenever the cleaning robot moves at every predetermined distance, extracting the surrounding information of the charging-stand from the surrounding image around charging-stand inputted from the camera unit 160 according to the searched position and direction, and storing the extracting surrounding information on the surrounding information database 181.

Whenever the cleaning robot moves at every predetermined distance, the surrounding information acquisition unit 154 stores the surrounding information such as a shape and position of a surrounding object around charging-stand, and arrangement information of the charging-stand and object, which are extracted from the image around the charging-stand inputted through a driving of the camera unit 160. A moving distance of the cleaning robot may calculate according to a driving of a wheel as the running unit or the like.

For example, in the case where household goods or fixed objects such as a socket or a ornament around the charging-stand are paced, the surrounding information acquisition unit 154 stores the surrounding information such as a shape and position of a surrounding object around charging-stand, and arrangement information of the charging-stand and object, which are extracted from the image around the charging-stand.

The charging-stand position calculating unit 153 extracts the surrounding information from the image inputted by the camera unit 160 according to the charging request signal, compares the extracted surrounding information with the surrounding information stored in the surrounding information database 181, calculates a direction of a position at which the charging-stand is placed, and outputs a control signal to the running control unit 151 so that the cleaning robot is returned to the charging-stand.

Therefore, when a separation between the charging-stand and the cleaning robot is close, the cleaning robot calculates the position and direction of the charging-stand using the image information of the charging-stand, and returns to the charging-stand. When the separation is far away, the cleaning robot calculates the position and direction of the charging-stand using the surrounding information around the charging-stand, thereby rapidly returning to the charging-stand.

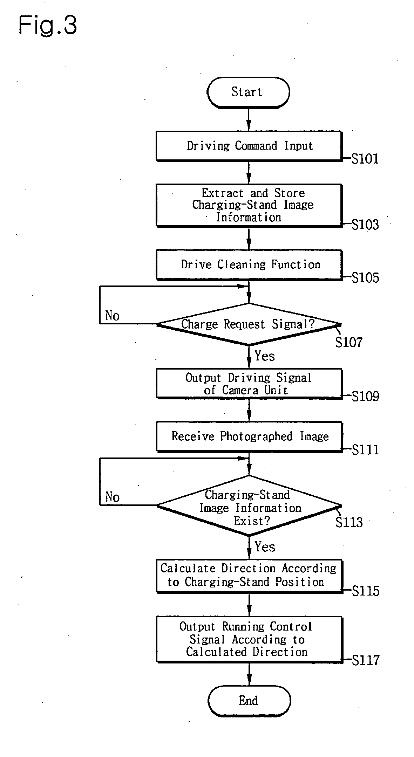

FIG. 3 is a flowchart illustrating an auto-return method to a charging-stand for a cleaning robot according to a preferred embodiment of the present invention. As shown in this drawing, the auto-return method to a charging-stand for a cleaning robot according to a preferred embodiment of the present invention will be described as follows.

To begin with, when a user performs a driving command for the cleaning robot which is fully charged in the charging-stand, for example, when a user pushes an input button arranged in the cleaning robot or an input button of an remote controller which is provided therewith in purchasing the cleaning robot (S101), the cleaning robot receives the driving command and deviates from the charging-stand. Herein, the camera arranged at a predetermined position of the cleaning robot take a photograph of an image of the corresponding charging-stand, and outputs the photographing image to the image information acquisition unit 152 of the microprocessor 150.

The image information acquisition unit 152 extracts color information such as RGB value of the charging-stand or shape information such as an outline of the charging-stand which is inputted from the camera unit 160, and stores the extracted information on the image information database 171 (S103).

When the microprocessor 150 acquires the image information of the charging-stand by the image information acquisition unit 152 thereof, it outputs a control signal to the running control unit 151 and the inhaling unit 110 for detecting and inhaling dust and impurities in the cleaning area, and causes the cleaning robot to clean the dust and impurities (S105). The voltage detecting circuit 180 of the cleaning robot measures a voltage of the battery 140 at each predetermined period of time, and an auto-charging time is determined by detecting the power level remained on the battery 140. The voltage detecting circuit 180 compares the detected voltage with the reference voltage value stored in the memory, and outputs the charging request signal to the charging-stand position calculating unit 153 when the detected voltage is below the reference voltage value (S107).

The charging-stand position calculating unit 153 of the microprocessor 150 receives the charging request signal, and outputs the driving signal to the camera unit 160 (S109). In addition, it outputs the control signal to the running control unit 151 so that the camera unit 160 can acquire the image while rotating 360 degrees at the predetermined interval. Thus, the running unit 151 drives the running unit 130 so that the cleaning robot rotates 360 degrees at the predetermined interval, for example, 30 degrees interval, and thereby the camera unit 160 tales a photograph of all images around of the cleaning robot, and transmits the photographing image to the charging-stand position calculating unit 153 (S111).

The charging-stand position calculating unit 153 checks image information of the charging-stand from the image inputted through the camera unit 160 (S113). Herein, in existing the corresponding image information, the charging-stand position calculating unit 153 calculates a direction which the charging-stand is placed, and outputs the running control unit 151 (S115, S117).

When a distance between cleaning robot and the charging-stand goes away, it is difficult to extract the color and shape information of the charging-stand from the image inputted the camera unit 160. Thus, it is difficult to calculate exactly a position and direction of the charging-stand.

Consequently, the cleaning robot according to another embodiment the present invention further includes a surrounding information acquisition unit 154 for searching the position and direction of the charging-stand whenever the cleaning robot moves at every predetermined distance, extracting the surrounding information of the charging-stand from the surrounding image around charging-stand inputted from the camera unit 160 according to the searched position and direction, and storing the extracting surrounding information on the surrounding information database 181. Thus, the cleaning robot can exactly and rapidly return at a long distance to the charging-stand.

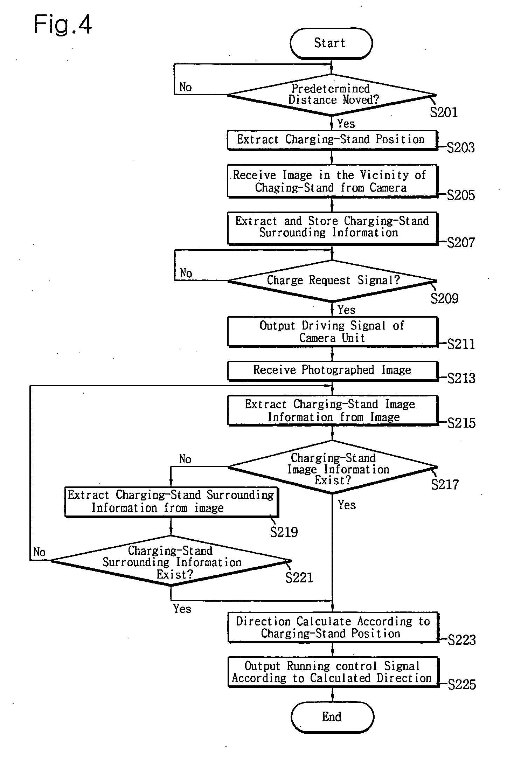

FIG. 4 is a flowchart illustrating a method for auto-returning to a charging-stand for a cleaning robot according to another embodiment of the present invention. As shown in this drawing, the auto-return method to a charging-stand for a cleaning robot according to another embodiment of the present invention will be described as follows.

To begin with, whenever the cleaning robot moves at every predetermined distance, for example, according to a moving of wheels of the running unit 130, the microprocessor 150 searches a position of the charging-stand by means of the above-mentioned procedures (S201, S203), and transmits a driving command to the camera unit 160 in order to acquire the image the searched image around of the charging-stand. The camera unit 160 takes a photograph of a surrounding image centering around the charging-stand, and outputs the photographing image to the surrounding image acquisition unit 154 (S205).

The surrounding image acquisition unit 154 extracts surrounding information such as a shape and position of a surrounding object around charging-stand and arrangement information of the charging-stand and object, and stores the extracted information on the surrounding information database 181 (S207), wherein the surrounding information is extracted from the image around the charging-stand for the cleaning robot.

For example, in the case where household goods or fixed objects such as a socket or a ornament around the charging-stand are paced, the surrounding information acquisition unit 154 extracts the surrounding information such as a shape and position of a surrounding object around charging-stand and arrangement information of the charging-stand and object, and stores the extracted information on the surrounding information database 181, wherein the surrounding information is extracted from the image around the charging-stand.

When the microprocessor 150 acquires the surrounding information around the charging-stand by the surrounding information acquisition unit 154 thereof, it outputs a control signal to the running control unit 151 and the inhaling unit 110 for detecting and inhaling dust and impurities in the cleaning area, and causes the cleaning robot to clean the dust and impurities. The voltage detecting circuit 180 of the cleaning robot measures a voltage of the battery 140 at each predetermined period of time, and an auto-charging time is determined by detecting the power level remained on the battery 140. The voltage detecting circuit 180 compares the detected voltage with the reference voltage value stored in the memory, and outputs the charging request signal to the charging-stand position calculating unit 153 when the detected voltage is below the reference voltage value (S209).

The charging-stand position calculating unit 153 of the microprocessor 150 receives the charging request signal, and outputs the driving signal to the camera unit 160 (S211). In addition, it outputs the control signal to the running control unit 151 so that the camera unit 160 can acquire the image while rotating 360 degrees at the predetermined interval. Thus, the running unit 151 drives the running unit 130 so that the cleaning robot rotates 360 degrees at the predetermined interval, for example, 30 degrees interval, and thereby the camera unit 160 tales a photograph of all images around of the cleaning robot, and transmits the photographing image to the charging-stand position calculating unit 153 (S213).

The charging-stand position calculating unit 153 checks image information of the charging-stand from the image inputted through the camera unit 160 (S215). Herein, when the corresponding image information exists (S217), the charging-stand position calculating unit 153 calculates a direction which the charging-stand is placed, and outputs the running control unit 151 (S223, S225).

In addition, when the corresponding image information does not exist (S217), the charging-stand position calculating unit 153 searches an object which is agreed with the surrounding information such as the shape and position of a surrounding object around charging-stand and arrangement information of the charging-stand and object which is stored on the surrounding information from image photographed all images around the corresponding cleaning robot.

When the object is agreed with the surrounding information according to the searched result (S221), the direction of position which the charging-stand is placed through the corresponding surrounding information is calculated (S223). Thus, the charging-stand position calculating unit 153 outputs the control signal to the running control unit so that the cleaning robot is returned to the charging-stand (S225).

For example, in the case where the socket exists around the charging-stand, the surrounding information acquisition unit 154 stores the surrounding information on the surrounding information database 181, wherein the surrounding information includes the color information of the corresponding socket, the shape information as an outline information of the corresponding socket, and the arrangement information according as a determination is made as to whether the socket is placed at any direction of the charging-stand, from the image around the charging-stand inputted through the camera unit 160.

When the charging request signal is inputted from the voltage detecting circuit 180, the charging-stand position calculating unit 153 searches the socket which is agreed with the color information of the corresponding socket, the shape information as an outline information of the corresponding socket, and the arrangement information according as a determination is made as to whether the socket is placed at any direction of the charging-stand, from the image around the charging-stand inputted through the camera unit 160. In addition, the charging-stand position calculating unit 153 calculates the direction at which the corresponding charging-stand is placed, and outputs the control to the running control unit 151.

As apparent from the above description, the present invention provides a cleaning robot having an auto-return function to a charging-stand, wherein the cleaning robot detects a direction and position of a charging-stand using image information of the charging-stand, and thereby correctly and rapidly returning to the charging-stand for the cleaning robot, and a method using the same.

In addition, when a separation between the charging-stand and the cleaning robot is close, the cleaning robot calculates the position and direction of the charging-stand using the image information of the charging-stand, and returns to the charging-stand. When the separation is far away, the cleaning robot calculates the position and direction of the charging-stand using the surrounding information around the charging-stand, thereby rapidly returning to the charging-stand.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A cleaning robot having an auto-return function to a charging-stand, the cleaning robot is **characterized by** photographing to store an image of the charging-stand, when detecting a return signal of the charging-stand, photographing an external image, confirming a position of the charging-stand from the photographed external image, and returning to the charging-stand.

2. The cleaning robot as set forth in claim 1, wherein the cleaning robot comprises:
a camera unit for photographing an external image containing the charging-stand image, converting it into electrical image information, and outputting externally; and
a microprocessor for storing the image information inputted the camera unit, acquiring position information of the charging-stand from the external image on the basis of the image information of the charging-stand in detecting a return signal, and causing the cleaning robot to be returned to the charging-stand.

3. The cleaning robot as set forth in claim 1 or 2, wherein the cleaning robot comprises:
a memory for storing an operating program for a driving of the cleaning robot, the memory including an image information database for storing the image information of the charging-stand for the cleaning robot; and
a voltage detecting circuit for detecting a battery voltage of the cleaning robot at every predetermined period, and outputting a charging request signal when the detected battery voltage is below a reference value.

4. The cleaning robot as set forth in claim 2 or 3, wherein the microprocessor comprises:
a running control unit for controlling a running of the cleaning robot;
an image information acquisition unit for extracting the image information of the charging-stand from the image information inputted through the camera unit, and storing the extracted image information of the charging-stand in the database of the image information; and
a charging-stand position calculating unit for searching the image information of the charging-stand from the image information inputted through the camera unit when the charging request signal is inputted from the battery voltage detecting circuit, acquiring position information of the charging-stand, and outputting a running control signal to the running control unit, wherein the running control signal causes the cleaning robot to be returned to the charging-stand according to the acquired position information.

5. The cleaning robot as set forth in claim 3, wherein the memory further comprises a surrounding information database for storing the surrounding information nearby the charging-stand.

6. The cleaning robot as set forth in claim 5, wherein the microprocessor comprises:
a running control unit for controlling a running of the cleaning robot;
an image information acquisition unit for extracting the surrounding information from the surrounding image around the charging-stand inputted through the camera unit, and storing the extracted surrounding information around the charging-stand in the database of the surrounding information; and
a charging-stand position calculating unit for searching the surrounding information around the charging-stand from the image information inputted through the camera unit when the charging request signal is inputted from the battery voltage detecting circuit, acquiring position information of the charging-stand on the basis of the surrounding information around the charging-stand, and outputting a running control signal to the running control unit, wherein the running control signal causes the cleaning robot to be returned to the charging-stand according to the acquired position information.

7. The cleaning robot as set forth in claim 4 or 6, wherein the camera unit comprises:
a camera control unit for controlling the photographing of the external image depending on a photographing control signal of the microprocessor;
a photographing unit for photographing the external image depending on a control of the camera control unit; and
a converter for converting the external image photographed through the photographing unit, into electrical image information, and .outputting the electrical image information.

8. The cleaning robot as set forth in claim 4 or 6, wherein the charging-stand position calculating unit causes, when the charging request signal is inputted, the cleaning robot to rotate 360 degrees at a predetermined interval, generates a rotation control signal for photographing the external image, and outputs the rotation control signal to the running control unit.

9. The cleaning robot as set forth in claim 4 or 6, wherein the image information of the charging-stand is shape information based upon an outer shape of the charging-stand, or color information based upon a color of the charging-stand.

10. The cleaning robot as set forth in claim 6, wherein the surrounding information around the charging-stand is shape information based upon an outer shape of the surrounding around the charging-stand, or color information based upon an outer shape of the surrounding around the charging-stand.

11. A method for auto-returning to a charging-stand for a cleaning robot, the method comprising the steps of:
a) acquiring image information of the charging-stand from images inputted through a camera, and storing the acquired image information of the charging-stand for the cleaning robot;
b) receiving information of a power level remained on a battery of the cleaning robot, the a power level remained on the battery being periodically measured;
c) outputting a signal for driving the camera in order to acquire a surrounding image when the a power level remained on the battery is below a predetermined value; and
d) searching the image information of the charging-stand acquired and stored by accomplishing the step a) in the image inputted through the camera, confirming a position of the charging-stand, and thereby outputting a control signal for returning the cleaning robot to the charging-stand.

12. The method as set forth in claim 11, wherein the image information includes at least any one of color information and shape information of the charging-stand.

13. The method as set forth in claim 11 or 12, wherein the image inputted though the camera unit in the step d) is an image which is acquired during rotating 360 degrees at a predetermined interval.

14. The method as set forth in any of claims 11 to 13, further comprises e) acquiring surrounding information around the charging-stand in the image inputted through the camera unit whenever the cleaning robot moves at every predetermined distance, and storing the acquired surrounding information;
wherein, the step d) further comprises a step of extracting the surrounding information in the image inputted through the camera unit, comparing the extracted surrounding information with the surrounding information acquired and stored by accomplishing the step e), calculating a direction of a position at which the charging-stand is placed, and thereby outputting the control signal for returning the cleaning robot to the charging-stand.

15. The method as set forth in claim 14, wherein the surrounding information includes shape information of a surrounding object around the charging-stand.
